Europäisches Patentamt

**European Patent Office**

Office européen des brevets

(19)

(11) Numéro de publication: **0 127 502**

**A1**

(12) ## DEMANDE DE BREVET EUROPEEN

(21) Numéro de dépôt: **84400849.0**

(22) Date de dépôt: **26.04.84**

(51) Int. Cl.³: **H 02 G 7/05**

(30) Priorité: 28.04.83 FR 8307070
20.04.84 FR 8406317

(43) Date de publication de la demande:
**05.12.84 Bulletin 84/49**

(84) Etats contractants désignés:
**AT BE CH DE GB IT LI LU NL SE**

(71) Demandeur: **ENTREPRISE PAULY**
**"Les Paltrats"**
**F-03500 Saint Pourcain sur Sioule Allier(FR)**

(72) Inventeur: **Guyader, Jacques**
**"Chateau du Vigier" La Ferte Hauterive**
**Neuilly le Real Allier(FR)**

(74) Mandataire: **Cabinet BERT, DE KERAVENANT &**
**HERRBURGER**
**115, Boulevard Haussmann**
**F-75008 Paris(FR)**

(54) **Rallonge d'ancrage pour ligne électrique.**

(57) a) Rallonge d'ancrage pour ligne électrique,

b) catactérisée en ce qu'elle est constituée d'un premier élément (1) destiné à recevoir des ferrures ou une chaine d'isolateurs, d'un second élément (6, 7) destiné à recevoir une chaine d'isolateurs ou des ferrures, le second élément (6, 7) étant susceptible de se déplacer par rapport au premier élément (1), ainsi qu'un dispositif de verrouillage (10, 11, 12) maintenant le second élément (6, 7) dans une position lorsque la contrainte exercée par le conducteur sur la rallonge d'ancrage est inférieure à une valeur de seuil.

c) L'invention s'applique à la protection des poteaux électriques contre les surcharges.

Fig.1

EP 0 127 502 A1

1

" Rallonge d'ancrage pour ligne électrique ".

La présente invention se rapporte à une rallonge d'ancrage pour ligne électrique destinée à être fixée d'une part aux ferrures d'un support d'ancrage et d'autre part au conducteur de la ligne, notamment par l'intermédiaire d'une chaîne d'isolateurs.

L'ancrage d'une ligne électrique sur les ferrures d'un support d'ancrage se fait actuellement au moyen des éléments suivants en allant du conducteur aux ferrures : manchon d'ancrage, chaîne d'isolateurs, rallonge d'ancrage.

Ces éléments sont dimensionnés en fonction des contraintes auxquelles ils doivent être soumis. Cependant, notamment sous l'effet de la neige ou du givre, ces contraintes sont de nature à augmenter extrêmement rapidement, et à dépasser dans une large mesure, les contraintes maximales pour lesquelles les éléments d'ancrage ont été dimensionnés. Cette augmentation des efforts exercés par les conducteurs peut avoir de graves conséquences telles que la détérioration, voire la rupture des supports d'ancrage. Ces dégâts, outre de graves conséquences sur le plan financier, peuvent même priver d'électricité des régions entières pendant de longues heures.

La présente invention a pour objet de remédier à ces inconvénients en proposant une rallonge d'ancrage de sécurité susceptible d'abaisser quasi instantanément l'effort auquel sont soumis les poteaux ou autre support de ligne électrique, lorsque cet effort devient trop important et s'approche de la valeur F pour laquelle il y a un risque de rupture du poteau.

A cet effet, la rallonge d'ancrage selon l'invention est caractérisée en ce qu'elle est constituée d'un premier élément comportant à l'une de ses extrémités un premier dispositif de fixation destiné à recevoir les ferrures ou la chaîne d'isolateurs, d'un second élément comportant à l'une de ses extrémités opposée à l'extrémité du premier élément portant le premier dispositif de fixation, un second dispositif de fixation destiné à recevoir la chaîne d'isolateurs ou les ferrures, le second élément étant susceptible de se déplacer par rapport au premier élément dans un sens correspondant aux contraintes maximales, ainsi qu'un dispositif de verrouillage maintenant le second élément dans une première position par rapport au premier élément lorsque la contrainte exercée par le conducteur sur la rallonge d'ancrage est inférieure à une valeur de seuil Fo, elle-même inférieure à la valeur F pour laquelle il y a risque de rupture du support, et se rompant lorsque cette contrainte atteint ou dépasse la valeur de seuil pour entraîner le second élément vers une seconde position par rapport au premier.

Ce mouvement du second élément par rapport au premier entraîne une diminution quasi instantanée de l'effort auquel est soumis le support, et assure donc une protection efficace de celui-ci à l'encontre des risques de rupture.

La rallonge d'ancrage selon l'invention correspond en fait à l'association d'un système amortisseur à gaz ou à liquide fonctionnant suivant le même principe qu'un amortisseur de suspension d'automobile et d'une goupille de sécurité solidarisant les parties fixes et mobiles de cet amortisseur et se rompant pour un effort supérieur à un effort Fo prédéterminé.

Selon une autre caractéristique de l'invention, le premier élément est constitué par un cylindre creux dans lequel se déplace un piston monté sur une tige qui constitue le second élément.

De préférence, une première base de ce cylindre porte le premier dispositif de fixation tandis que la seconde base est munie d'un orifice permettant le passage de la tige du piston à l'extrémité de laquelle est monté le second dispositif de fixation.

Il s'agit donc là d'une configuration extrêmement simple et bon marché.

Selon une autre caractéristique de l'invention, le dispositif de verrouillage est constitué par une goupille qui solidarise le cylindre et la tige du piston en pénétrant au travers de trous de verrouillage prévus à cet effet, dans les parois de ces deux éléments, cette goupille étant dimensionnée de manière à se rompre lorsqu'elle est soumise à une contrainte égale ou supérieure à la valeur de seuil Fo dans la direction de l'axe de la tige de piston.

Bien entendu, pour que le dispositif puisse fonctionner convenablement, il est nécessaire que, dans la première position, le piston soit situé au voisinage de la première base du cylindre, pour, lors de la rupture de la goupille de verrouillage, avoir une course suffisante (jusqu'à la seconde base du cylindre) pour entraîner une diminution suffisante de la contrainte à laquelle est soumis le support, et donc, assurer une protection efficace.

Selon une autre caractéristique de l'invention, le cylindre est étanche et rempli d'un gaz ou d'un liquide amortisseur, notamment de l'huile qui permet de freiner le mouvement du piston à l'intérieur du cylindre lors de la rupture de la goupille, assurant ainsi un fonctionnement sans "à-coup" du dispositif et par suite assurant la sécurité d'emploi recherchée à l'encontre des surcharges.

Selon une autre variante de l'invention, il est également possible d'intégrer à la rallonge d'ancrage la fonction normalement remplie par la chaîne d'isolateurs.

A cet effet, et selon une autre caractéristique de l'invention, la rallonge d'ancrage est réalisée en un matériau isolant.

Ce matériau peut être choisi dans une large gamme de matériaux actuellement proposée sur le marché ; des résultats particulièrement avantageux ont pu être obtenus en utilisant du polycarbonate.

Selon une autre caractéristique de l'invention, le cylindre creux comporte, sur sa surface externe, une ou plusieurs surépaisseurs dont la forme et les dimensions sont choisies de manière à obtenir, le long de cette surface une ligne de fuite de longueur suffisante pour conserver l'isolation entre la ferrure support et le conducteur en cas de surtension.

Là encore, plusieurs configurations sont possibles sans pour cela sortir du cadre de l'invention.

Selon une caractéristique particulièrement avantageuse de l'invention, la ou les surépaisseurs sont constituées par des ailettes coniques, notamment deux ailettes identiques munies de nervures sur leur face interne.

Les caractéristiques de la rallonge d'ancrage qui fait l'objet de l'invention seront décrites plus en détail en se référant aux dessins annexés, dans lesquels :

       - la figure 1 représente le dispositif dans sa première position,

       - la figure 2 représente le dispositif dans sa seconde position,

       - la figure 3 est une variante de la figure 2.

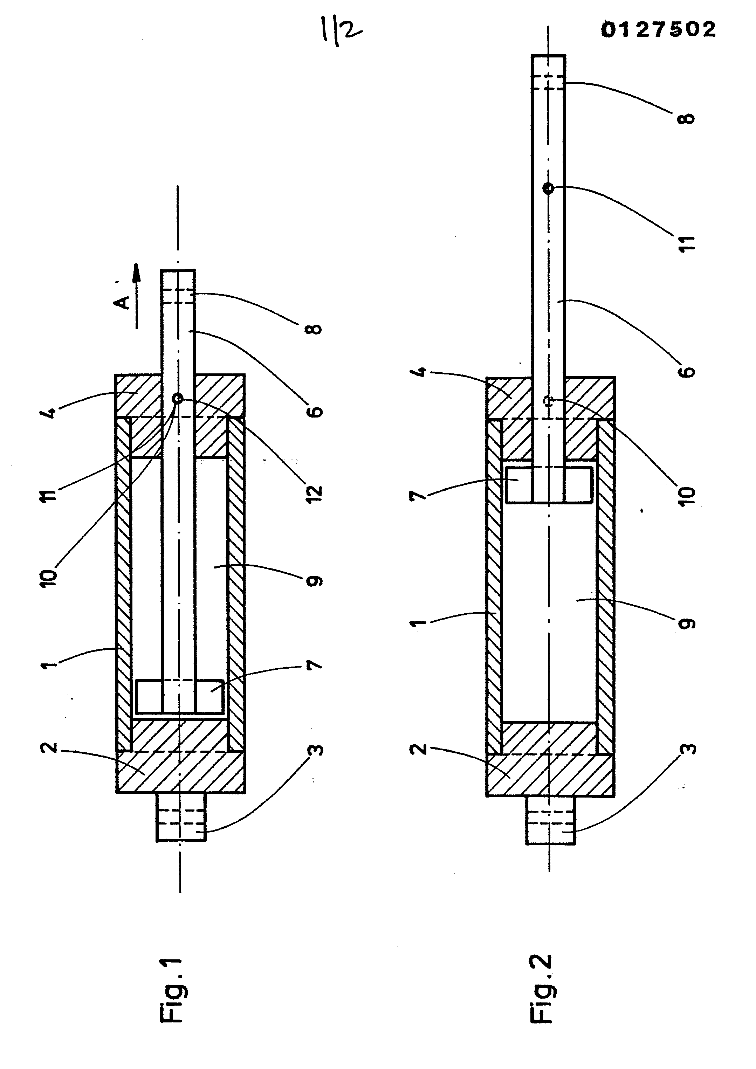

       Selon les figures 1 et 2, la rallonge d'ancrage pour ligne électrique objet de l'invention est constituée d'un cylindre creux 1 dont une première base 2 comporte un premier dispositif de fixation 3 destiné à recevoir les ferrures non représentées d'un support d'ancrage et dont la seconde base 4 est munie d'un orifice 5 permettant le passage de la tige 6 d'un piston 7 susceptible de se déplacer dans la partie interne du cylindre 1 entre une première position représentée sur la figure 1 et une seconde position représentée sur la figure 2.

       L'extrémité de la tige 6 opposée au piston 7 porte un second dispositif de fixation 8 destiné à recevoir la chaîne d'isolateurs et le conducteur (non représentés).

       Bien entendu, les positions respectives des ferrures et de la chaîne d'isolateurs pourraient être inversées sans pour cela sortir du cadre de l'invention.

       La partie interne 9 du cylindre 1 peut être, soit simplement remplie d'air, soit l'être par un liquide tel que de l'huile qui permet d'amortir dans une large mesure le mouvement du piston 7 entre les positions respectivement représentées sur les figures 1 et 2.

       La seconde base 4 du cylindre est pourvue d'un orifice de verrouillage traversant 10 pouvant correspondre dans une position donnée du piston (représenté sur la figure 1) à un orifice traversant correspondant 11 prévu dans la tige 6 du piston 7.

Selon la figure 1, cette première position est prévue de façon telle que le piston 7 s'y trouve à proximité de la première base 2 du cylindre 1. Il s'agit de la position adoptée lors du montage du dispositif, au cours duquel l'ensemble piston-cylindre est maintenu en position grâce à une goupille 12 mise en place dans les orifices 10 et 11.

Cette goupille 12 est choisie de manière à se rompre lorsque la contrainte exercée selon la flèche A par le conducteur sur la rallonge d'ancrage devient égale ou supérieure à une valeur de seuil Fo elle- même inférieure à la valeur pour laquelle il y a un risque de rupture du support.

Au moment de la rupture de la goupille 12, le piston 7 se trouve automatiquement entraîné vers la position représentée sur la figure 2 dans laquelle il se trouve contre la seconde base 4 du cylindre 1. Ce mouvement, amorti, ainsi que la modification géométrique résultante ont pour conséquence une diminution quasi instantanée de la contrainte à laquelle est soumis le support, et par suite une protection efficace de celui- ci.

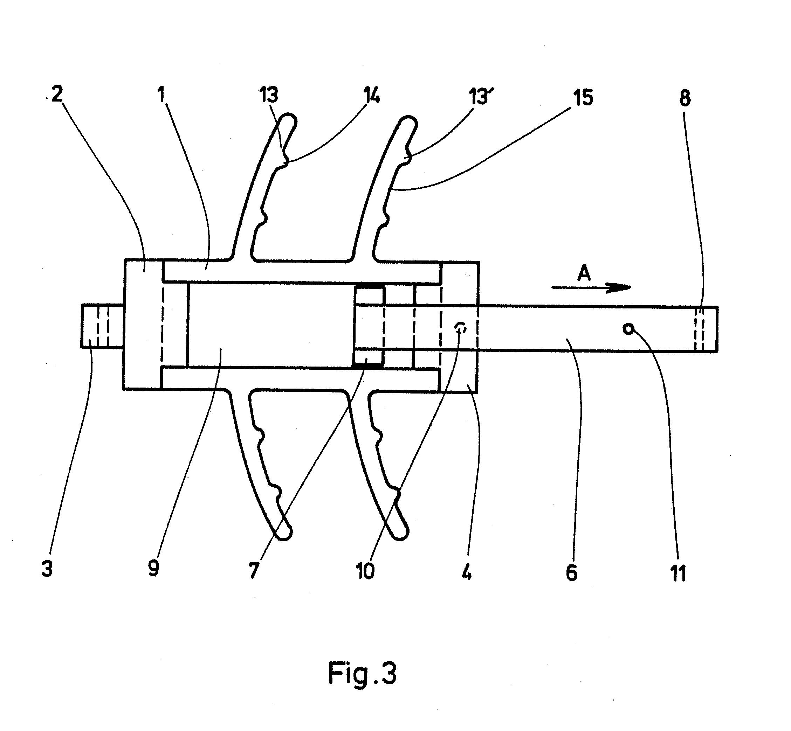

Selon la figure 3, le cylindre creux 1 est en un matériau isolant, notamment en polycarbonate et comporte, sur sa surface externe, deux ailettes coniques identiques 13 et 13' munies de nervures 14 sur leur face interne 15.

Le rôle de ces ailettes 13, 13' est d'obtenir, sur la surface externe du cylindre 1, une ligne de fuite de longueur suffisante pour conserver l'isolation entre la ferrure support et le conducteur en cas de surtension.

Donc, le rôle des ailettes 13, 13' est de remplir l'une des fonctions de la chaîne d'isolateurs (longueur de la ligne de fuite ; la fonction d'isolation sous la tension nominale de la ligne étant remplie par les matériaux isolants constituant le produit).

Bien entendu, les figures ne doivent être considérées qu'à titre d'exemple et les éléments de la rallonge d'ancrage pour ligne électrique pourraient avoir des configurations autres sans pour cela sortir du cadre de l'invention pour peu qu'il y ait respect des principes de base consistant en l'association d'un amortisseur et d'une goupille de sécurité.

<u>R E V E N D I C A T I O N S</u>

1°) Rallonge d'ancrage pour ligne électrique destinée à être fixée d'une part aux ferrures d'un support d'ancrage et d'autre part au conducteur de la ligne, notamment par l'intermédiaire d'une chaîne d'isolateurs, caractérisée en ce qu'elle est constituée d'un premier élément (1) comportant à l'une de ses extrémités (2) un premier dispositif de fixation (3) destiné à recevoir les ferrures ou la chaîne d'isolateurs, d'un second élément (6, 7) comportant à l'une de ses extrémités (4) opposée à l'extrémité (2) du premier élément (1) portant le premier dispositif de fixation (3), un second dispositif de fixation (8) destiné à recevoir la chaîne d'isolateurs ou les ferrures, le second élément (6, 7) étant susceptible de se déplacer par rapport au premier élément (1) ainsi qu'un dispositif de verrouillage (10, 11, 12) maintenant le second élément (6, 7) dans une première position par rapport au premier élément (1) lorsque la contrainte exercée par le conducteur sur la rallonge d'ancrage est inférieure à une valeur de seuil Fo et se rompant lorsque cette contrainte atteint ou dépasse la valeur de seuil pour entraîner le second élément (6, 7) vers une seconde position par rapport au premier, le premier (1) et le second élément (6, 7) fonctionnant d'une manière similaire à un amortisseur tandis que le dispositif de verrouillage (10, 11, 12) assure la sécurité vis-à-vis des surcharges.

2°) Rallonge d'ancrage selon la revendication 1, caractérisée en ce que le premier élément (1) est constitué par un cylindre creux dans lequel se déplace le piston (7) monté sur une tige (6) qui constitue le second élément.

3°) Rallonge d'ancrage selon l'une quelconque des revendications 1 et 2, caractérisée en ce qu'une première base (2) du cylindre (1) porte le premier dispositif de fixation (3) tandis que la seconde base (4) est munie d'un orifice (5) permettant le passage de la tige de piston (6) à l'extrémité de laquelle est monté le second dispositif de fixation (8).

4°) Rallonge d'ancrage selon l'une quelconque des revendications 1 à 3, caractérisée en ce que le dispositif de verrouillage (10, 11, 12) est constitué par une goupille (12) qui solidarise le cylindre (1) et la tige (6) du piston (7) en pénétrant au travers de trous de verrouillage (10, 11) prévus à cet effet dans les parois de ces deux éléments, cette goupille (12) étant dimensionnée de manière à se rompre lorsqu'elle est soumise à une contrainte égale ou supérieure à la valeur de seuil Fo dans la direction de l'axe de la tige (6) du piston.

5°) Rallonge d'ancrage selon l'une quelconque des revendications 1 à 5, caractérisée en ce que le cylindre (1) est étanche et rempli d'un gaz ou d'un liquide amortisseur notamment de l'huile.

6°) Rallonge d'ancrage selon l'une quelconque des revendications 1 à 5, caractérisée en ce qu'elle est réalisée en un matériau isolant notamment en polycarbonate.

7°) Rallonge d'ancrage selon la revendication 6, caractérisée en ce que le cylindre creux (1) comporte, sur sa surface externe une ou plusieurs surépaisseurs dont la forme et les dimensions sont choisies de manière à obtenir, le long de cette surface, une ligne de fuite de longueur suffisante pour converser l'isolation entre la ferrure support et le conducteur en cas de surtension.

8°) Rallonge d'ancrage selon la revendication 7, caractérisée en ce que la ou les surépaisseurs sont des ailettes coniques.

10

9°) Rallonge d'ancrage selon l'une quelconque des revendications 7 et 8, caractérisée en ce qu'elle comporte plusieurs surépaisseurs identiques.

10°) Rallonge d'ancrage selon l'une quelconque des revendications 7 à 9, caractérisée en ce qu'elle comporte deux surépaisseurs identiques.

11°) Rallonge d'ancrage selon l'une quelconque des revendications 7 à 10, caractérisée en ce que les surépaisseurs sont munies de nervures sur leurs faces internes.

Fig.1

Fig.2

1/2

0127502

Fig.3

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A-2 277 454  (L'ARCONNERIE) <br> * Page  3, lignes 22-29; figures 1,2 * | 1,2,4 | H 02 G    7/05 |
| Y | | 3,5-11 | |
| Y | DE-B-1 154 540  (LORÜNSER) <br> * Colonne 3, lignes 20-56; figure 1 * | 3,5 | |
| Y | FR-A-1 574 257  (ERICSSON) <br> * Page  1, lignes 27,28; page 2, lignes 21-26 * | 6 | |
| Y | US-A-4 174 464  (KAWAGUCHI) <br> * Colonne 1, lignes 1-33; colonne 2, lignes 9-43; figure 1 * | 7-11 | DOMAINES TECHNIQUES RECHERCHES (Int. Cl. 3) |
| A | GB-A-  977 529  (MILOW) <br> * Page  2, lignes 41-48, 97-126; figure 1 * | 1 | H 02 G    7/00 <br> H 01 B   17/00 |

Le présent rapport de recherche a été établi pour toutes les revendications

| Lieu de la recherche | Date d'achèvement de la recherche | Examinateur |
|---|---|---|
| LA HAYE | 09-08-1984 | TIELEMANS H.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

_____

& : membre de la même famille, document correspondant

OEB Form 1503. 03 82